# EUROPEAN PATENT SPECIFICATION

(11) **EP 3 530 990 B1**
(45) Date of publication and mention of the grant of the patent: **07.08.2024**
(21) Application number: 18158360.0
(22) Date of filing: 23.02.2018
(51) Int. Cl.: F16H 57/04, B60K 1/00, F16H 57/02

(54) **ARRANGEMENT COMPRISING AN ELECTRIC MACHINE AND A GEARBOX AND VEHICLE**
ANORDNUNG MIT EINER ELEKTRISCHEN MASCHINE UND EINEM GETRIEBE UND FAHRZEUG
AGENCEMENT COMPRENANT UNE MACHINE ÉLECTRIQUE ET UNE BOÎTE DE VITESSES ET VÉHICULE

(43) Date of publication of application: 28.08.2019
(73) Proprietor: Valeo eAutomotive Germany GmbH, 91056 Erlangen (DE)
(72) Inventor: Rottach, Arnim-Sebastian, 91052 Erlangen (DE)

(56) References cited:
- WO-A1-2011/051055
- DE-A1- 102012 202 454
- DE-A1- 102015 204 092
- DE-U1- 202016 002 577
- US-A- 5 341 901
- US-A1- 2004 154 846
- US-A1- 2013 119 793
- US-A1- 2015 080 134

## Description

The present invention relates to an arrangement comprising an electric machine and a gearbox. Aside, the invention relates to a vehicle.

Such arrangements with a high power density have high requirements with regard to heat dissipation under operation conditions. Thus cooling the arrangement is a challenging issue, particularly with respect to automotive applications.

For cooling a shaft of the electric machine, it has been proposed to use a shaft having a bore extending in axial direction of the shaft. A water supply device, around which the shaft rotates, is arranged inside the bore and sprays water into the bore. However, it has to be assured that water cooling the shaft does not enter the gearbox being typically lubed by means of oil.

Furthermore, it has been proposed to cool the gearbox by means of a splash lubrication based on oil inside the gearbox. Disadvantageously, a volume flow of the oil cannot be accurately set up when using splash lubrication. Thus, a setup of the cooling power is inaccurate as well.

Moreover, for distributing a lubricating and cooling oil inside the gear box and/or the electric machine a mechanical pump may be provided. However, such an additional component of the arrangement is expensive and may be problematic in case of a failure.

As a further concept, it has been proposed to distribute a lubricating and cooling oil inside the gearbox as well as inside the electric machine being driven "wetly". Disadvantageously, oil getting into an air gap of the electric machine may cause undesired drag.

Document US 2013/119793 A1 discloses an electric drive unit having an electric motor with a rotor arranged within a stator, wherein the rotor is connected in a torque-proof manner to a hollow output shaft. The electric drive unit comprises, in addition, a helical gearbox that is coupled on the input side to the output shaft of the electric motor. Lubricating oil is collected in a sump of a lubricating circuit. A plurality of impeller blades are fastened to the rotating output shaft, which impeller blades intermittently dip into the lubricating oil that has collected in the sump and said impeller blades propel said lubricating oil in an upward direction.

Document DE 10 2012 202454 A1 discloses a transmission device with an electric motor, a transmission section and a lubricating oil conveying device with a hollow shaft arrangement. Furthermore, a first conveyor structure section a second conveyor structure section are provided, which are configured to convey lubricating oil.

Document US 2015/0080124 A1 discloses a manual transmission with an input shaft and provided with a lubrication structure. A main oil hole of the input shaft extends in axial direction from a rear-side end portion of the input shaft towards a front side. A cylindrical hollow member having an open section only on the rear-side end is fitted into the main oil hole. A guide groove which guides the lubricating oil to the side opposite the entrance is formed on the inner circumferential surface of the hollow member.

US2004/4846 A1 discloses an arrangement comprising an electric machine and a gearbox, wherein the gearbox includes a shaft being rotatably coupled with a rotor of the electric machine and having a bore extending axially from a gearbox-side end into the direction of the electric machine.

Thus, it is an object of the present invention to improve cooling of an arrangement comprising an electric machine and a gearbox.

According to the invention, this object is achieved by an arrangement according to claim 1 and by a vehicle according to claim 14. Advantageous embodiments of the invention are laid down in the dependent claims.

The invention is based on the consideration that the fluid transportation means rotates with the shaft and transports the fluid, particularly oil, from or to the gearbox-side end of the shaft in axial direction, therein cooling the shaft and preferably components of the arrangement attached to the shaft. Therefore, the fluid transportation means may be considered as being connected to the shaft in a torque-proof manner. In other words, the shaft works as its own pump for transporting the fluid.

Advantageously, expensive and error-prone components being arranged in a nonrotating manner towards the rotor, such as a water supply device or mechanical pumps, can be omitted. Furthermore, as the fluid transportation means rotates with the shaft, the volume flow of the fluid depends on the rotation rate of the shaft. Thus, the intensity of the cooling effect increases with an increased rotation rate of the shaft as a larger amount of fluid is pumped through the shaft. Aside, transporting the fluid inside the shaft allows an encapsulation of the fluid so that an intrusion of the fluid into the electric machine can be prevented.

Typically, the electric machine and the gearbox are arranged within the same housing. Thus, the arrangement can be used as an integrated drive system, particularly for a vehicle. Preferably, the electric machine is configured to provide a rotation rate of 12.000 min⁻¹, preferably 15.000 min⁻¹, more preferably 22.000 min⁻¹, within a non-overloaded operation range. The aforementioned rotation rate allows to achieve high power densities desired for modern automotive drive systems. In particular, the electric machine is a synchronous machine, preferably a permanent-magnet synchronous machine, or an induction machine. The fluid transportation means may be configured to transport the fluid from the gearbox-side end of the shaft in the direction of the electric machine, when the rotor rotates in a first direction, and to transport the fluid to the gearbox-side end of the shaft from the direction of the electric machine, when the rotor rotates in a second direction opposite to the first direction. Typically, the first direction corresponds to a forward drive mode and/or the second direction corresponds to a reverse drive mode.

At least one fluid transportation means is typically configured to realize the function of an axial pump or an axial compressor, respectively.

One fluid transportation means may be an open circumferential contour, particularly a helical contour, extending in axial direction of the shaft and protruding in radial direction to the center of the bore. Thus, by rotating the shaft the contour transports the fluid through the shaft.

Preferably, the contour is realized by a contour element arranged inside the bore. Thus, the fluid transportation means can be mounted very easily when manufacturing the shaft. Particularly, it is not necessary to shape the bore, e.g. by drilling, for realizing the open circumferential contour. Typically, the contour element is arranged completely inside the bore.

Preferably, the contour element is made of a polymer and/or a metal. Thus, the contour element may be a molded part inserted into the bore. Particularly, the contour element is a wire. Therefore, it may have a substantially circular cross-section. Alternatively, the contour element is a ribbon. Thus, it may have a substantially flat cross-section.

According to the invention, one fluid transportation means comprises an impeller. The impeller may comprise a plurality of impeller elements or rotor blades arranged around a rotation axis of the shaft. Furthermore, a plurality of impellers may be provided at different axial positions of the rotation axis of the shaft.

The impeller may be arranged inside the bore. Alternatively or additionally, the impeller may be arranged outside the bore inside a fluid chamber storing the fluid. Thus, the fluid chamber may be used as a reservoir for the fluid. The chamber may be formed inside a gearbox-side housing element of the arrangement. Furthermore, a radius of each impeller element may be larger than a radius of the bore, in order to achieve a higher volume flow of the fluid.

According to the invention, the fluid transportation means comprises an impeller shaft, to which the impeller is attached and which extends inside the bore. The impeller shaft may be attached to the shaft in a torque-proof manner, e.g. by means of a press fit. The impeller shaft is supported slidingly at a gearbox-side end of the impeller shaft. A support element may be arranged inside a gearbox-side housing element of the arrangement. A sliding ring is provided around a portion of the impeller shaft being outside the bore.

One fluid transportation means may have a screw shaft. The screw shaft may be attached to the shaft in a torque-proof manner, e.g. by means of a press fit. The screw shaft may be supported slidingly, particularly at a gearbox-side end of the screw shaft. A support element may be arranged inside a gearbox-side housing element of the arrangement. Preferably, a sliding ring is provided around a portion of the screw shaft being outside the bore. Moreover, the fluid transformation means may have a combined shaft being partially formed the screw shaft and as the impeller shaft.

With respect to the inventive arrangement, one shaft may be a main shaft attached to the rotor and a gear of the gearbox. Therein, the main shaft may extend from the gearbox into the electric machine. Typically, the bore extends into a section of the main shaft, at which the rotor is attached. Thus, a combined cooling strategy for the electric machine as well as for the gearbox is achieved. Preferably, the bore of the main shaft has a first section having a first radius at the gearbox-side end and a second section inside the main shaft having a second radius being smaller than the first radius. Preferably, a fluid transformation means being the open circumferential contour is arranged inside the second section of the bore. A fluid transportation means having the impeller and/or a fluid transportation means having the screw shaft, particularly having the aforementioned combined shaft, may be arranged inside the first section of the bore. Between the first section and the second section the bore may comprise a third section having a third radius being smaller than the first radius and larger than the second radius. Preferably, the impeller shaft, the screw shaft or the combined shaft is attached to the main shaft in the torque-proof manner in the third section.

Especially, the bore extends though the rotor, wherein the arrangement comprises a conduit extending in radial direction and being connected in a fluid-conductive manner to the bore at a side of the rotor being opposite of the gearbox. Thus, the fluid may flow through the bore into the conduit, therein allowing a continuous cooling of the gearbox and the electric machine.

With respect to the inventive arrangement, one shaft may be an intermediate shaft rotatably coupled with the rotor via at least two gears of the gearbox. Thus, a cooling of the intermediate shaft is realized. Typically, the entire intermediate shaft extends inside the gearbox. The intermediate shaft and the main shaft may align in parallel.

Preferably, the inventive arrangement comprises a cooling circuit for the fluid, wherein the or a respective bore forms part of the cooling circuit. Therein, the cooling circuit may be closed via the bore of the main shaft and/or the conduit and/or the bore of the intermediate shaft.

Furthermore, the electric machine may comprise a cooling device for a stator, inside which the rotor rotates, wherein the cooling device may be configured to cool the fluid flowing through the cooling circuit. The cooling device may therefore be used for cooling the stator as well as for a heat exchange with the fluid. Thus, an additional heat exchanger for the fluid is omitted. Preferably, the cooling device for the stator is arranged at a machine housing of the electric machine. The cooling circuit may be attached to an outer side of the machine housing. For an improved heat dissipation, it is preferred that a heat sink structure, such as a pin fin structure, is arranged at the machine housing and the cooling circuit is configured such that the fluid flows along the heat sink structure.

The shaft, particularly the main shaft or the intermediate shaft, may be supported by a at least one bearing of the arrangement and may comprise a radial bore extending from the bore of the shaft allowing the fluid to leak the shaft for lubricating the bearing. Thus, a combined cooling and lubrication of the bearings is achieved. With respect to the main shaft one bearing may be arranged in a drive end shield of the electric machine and one bearing may be arranged in a non-drive end shield of the electric machine. The electric machine may comprise one or more radial shaft seals configured to prevent that the fluid gets in an air gap of the electric machine.

All statements referring to the inventive arrangement apply analogously to the inventive vehicle, so that the above-mentioned advantages of the inventive arrangement may be achieved as well.

Further details and advantages of the invention are disclosed in the following, wherein reference is made to the schematic drawings showing:
- Fig. 1: a sectional view of a yz-plane of an embodiment of an inventive arrangement comprising an electric machine and a gearbox;
- Fig. 2: a perspective view on parts of the arrangement;
- Fig. 3: a sectional view of a xy-plane of the arrangement;
- Fig. 4: a sectional view of a further yz-plane of the arrangement;
- Fig. 5: a detailed sectional view of a main shaft of the arrangement;
- Fig. 6: a detailed sectional view of the main shaft of a second embodiment of the inventive arrangement; and
- Fig. 7: a schematic drawing of an embodiment of a vehicle.

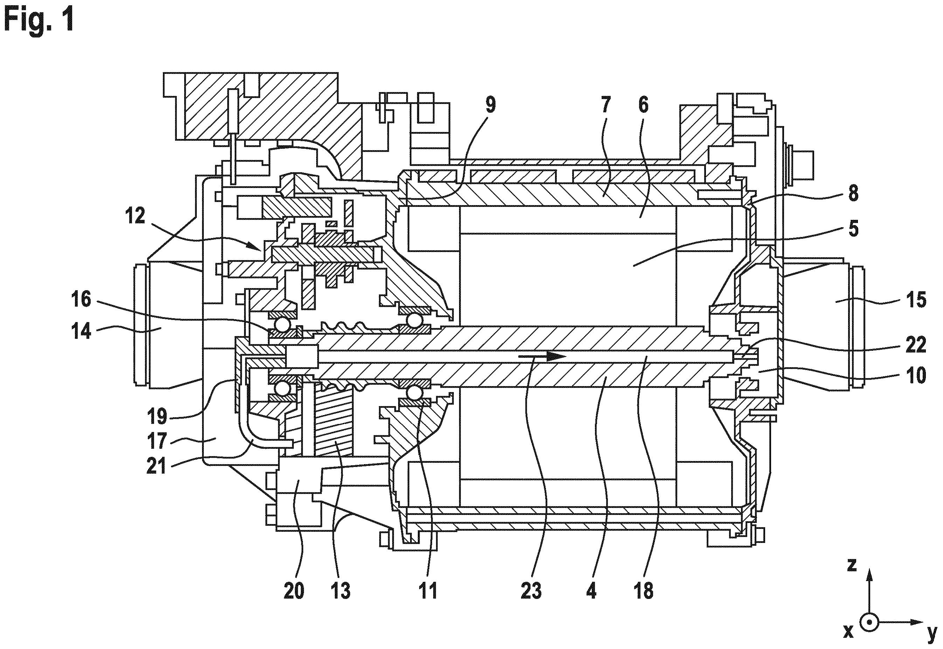

Fig. 1 is a sectional view of a yz-plane of an embodiment of an arrangement 1 comprising an electric machine 2 and a gearbox 3. Therein, a main shaft 4 extends between the electric machine 2 and the gearbox 3.

The electric machine 2 comprises a rotor 5 and a stator 6 and a machine housing 7, in which the rotor 5 and the stator 6 are arranged. The rotor 5 is attached to the main shaft 4 in a torque-proof manner. The machine housing 7 comprises a non-drive end shield 8 and a drive end shield 9. A first bearing 10 is arranged in the non-drive end shield 8 and a second bearing 11 is arranged in the drive end shield 9. The first bearing 10 and the second bearing 11 support the main shaft 4.

The gearbox 3 comprises a gear assembly 12 with a gear 13 attached to the main shaft 4 in a torque-proof manner. By means of the gear assembly 12 a rotation of the rotor 5 is transmitted to side shafts 14, 15 of the arrangement 1. The side shafts 14, 15 form hubs for wheels of a vehicle and are mutually connected by a differential (not shown). The gearbox 3 comprises a third bearing 16 supporting the main shaft 4 at its gearbox-side end. Moreover, the gearbox 3 comprises a gearbox housing 17 which is attached to the drive end shield 9 of the electric machine 2. Thus, the arrangement 1 forms an integrated drive system for the vehicle.

The main shaft 4 comprises a bore 18 extending through the entire main shaft 4. An inlet element 19 for conducting a lubricating and cooling fluid, such as oil, extends into the bore 18 and is connected to an oil sump 20 of the gearbox 3 by means of a first fluid channel 21. The first fluid channel 21 is formed inside the gearbox housing 17 or may be realized by a hose, alternatively. Furthermore, the main shaft 4 comprises an outlet 22 allowing the fluid to leak the bore 18. Aside, the main shaft 4 comprises a plurality of fluid transportation means, which will be explained in detail later and which are configured to transport the fluid through the bore 18 by means of rotating the main shaft 4. Therein, in a forward drive mode of the electric machine 2 the fluid is transported in a flow direction 23. In the case of a reverse drive mode of the electric machine 2 the fluid is transported in an opposite flow direction.

The bore 18 furthermore comprises radial bores in axial sections, to which the first bearing 10 and the second bearing 11 are attached. The radial bores allow the fluid to leak the bore 18 in order to lubricate the first bearing 10 and the second bearing 11. Thus, a combined cooling of the main shaft 4 and lubrication of the bearings 10, 11 by means of the fluid is realized. Moreover, the electric machine 2 comprises radial shaft seals (not shown) between the bearings 10, 11 and the rotor 5 to avoid that the fluid gets into an air gap of the electric machine 2.

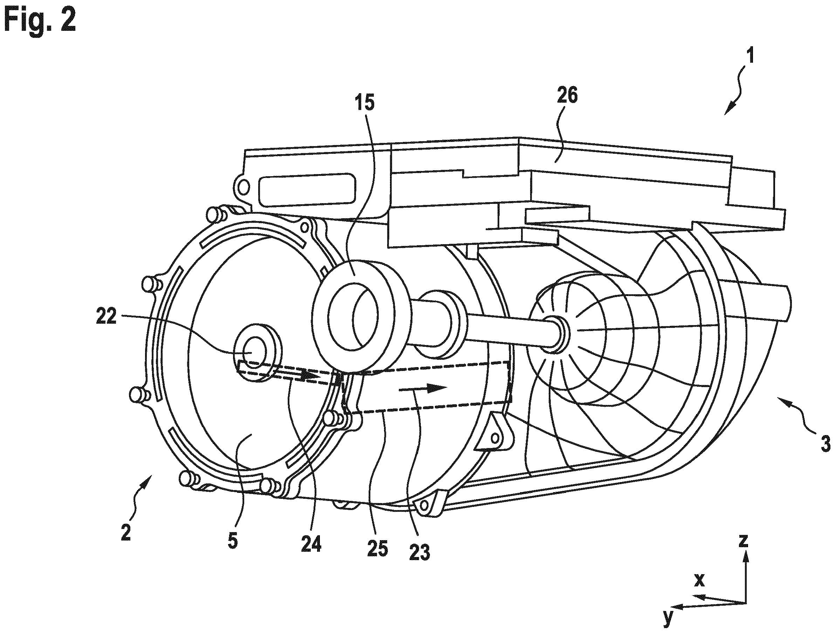

Fig. 2 is a perspective view of the arrangement 1 without the machine housing 7. The arrangement 1 further comprises a first conduit 24 extending in radial direction and being connected in a fluid-conductive manner to the bore 18 via the outlet 22 at a side of the rotor 5 being opposite of the gearbox 3. Therein, the first conduit 24 extends slightly into the direction of the oil sump 20 being the z-direction so that the fluid can flow through the first conduit 24 by means of gravity. The first conduit 24 is connected in a fluid-conductive manner to a second conduit 25, which extends in axial direction to the gearbox 3.

Furthermore, Fig. 2 depicts an inverter 26 of the arrangement 1 supplying the electric machine 2 electrically. Therein, the second conduit 25 extends into a free space between the electric machine 2, the gearbox 3 and the inverter 26.

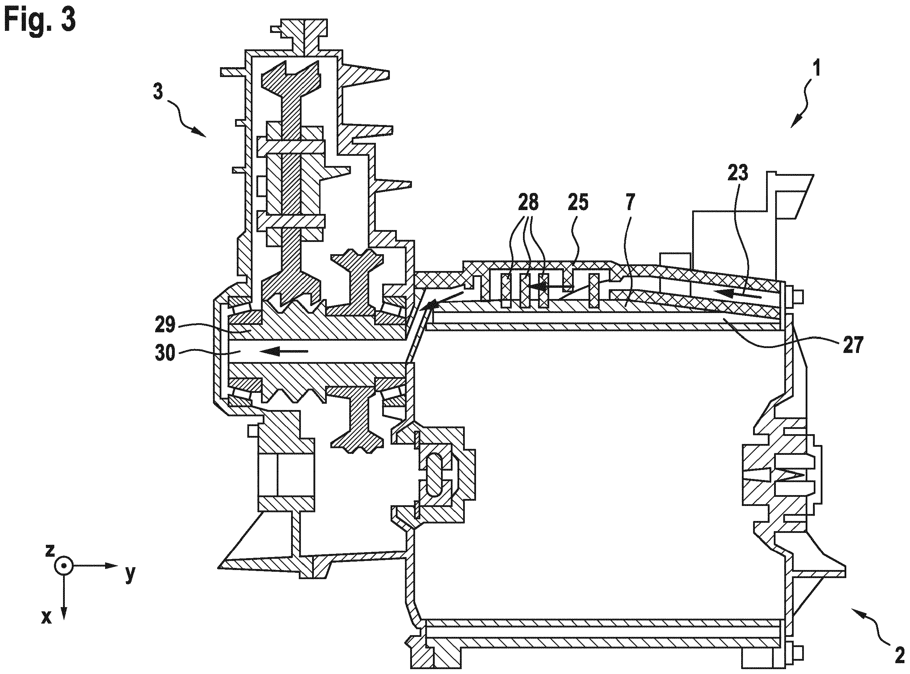

Fig. 3 is a sectional view of a xy-plane of the arrangement 1. The electric machine 2 comprises a cooling device 27 such as a cooling jacket integrated into the machine housing 7. The cooling device 27 is configured to cool the stator 6 of the electric machine 2. Therein, the second conduit 25 extends along the cooling device 27 so that heat of the fluid is dissipated by the cooling device 27. Moreover, a heat sink structure 28, such as a pin fin structure, is arranged at the machine housing 7 for improving the heat dissipation.

The gearbox 3 comprises an intermediate shaft 29 extending in parallel to the main shaft 4 and being coupled thereto via at least two gears, including the gear 13. Thus, the intermediate shaft 29 is rotatably coupled with the rotor 5. The intermediate shaft 29 comprises a bore 30 extending axially from its gearbox-side end into the direction of the electric machine 2. The second conduit 25 is connected to the bore 30 in a fluid-conductive manner so that the fluid can flow through the intermediate shaft 29, thereby cooling it.

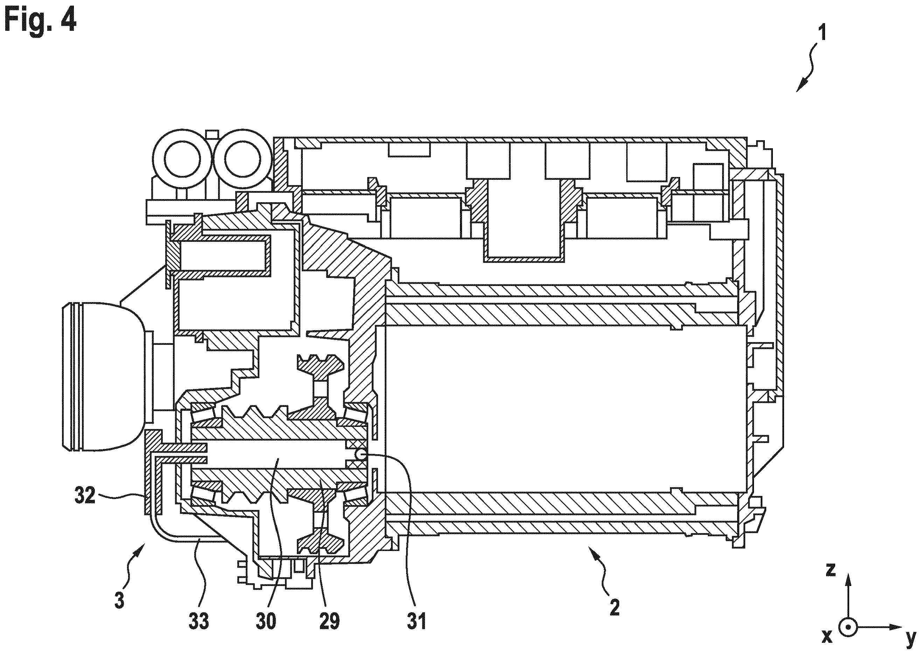

Fig. 4 is a sectional view of a yz-plane through the intermediate shaft 29. Therein, an inlet 31 connecting the second conduit 25 and the bore 30 is depicted. Furthermore, an outlet element 32 reaches into the bore 30. The outlet element 32 is connected to the oil sump 20 by means of a second fluid channel 33 corresponding to the first fluid channel 21. Thus, a cooling circuit closed via the bore 18 of the main shaft 4, the first conduit 24, the second conduit 25, the bore 30 of the intermediate shaft 29, the second fluid channel 33, the oil sump 20 and the first fluid channel 21 is realized.

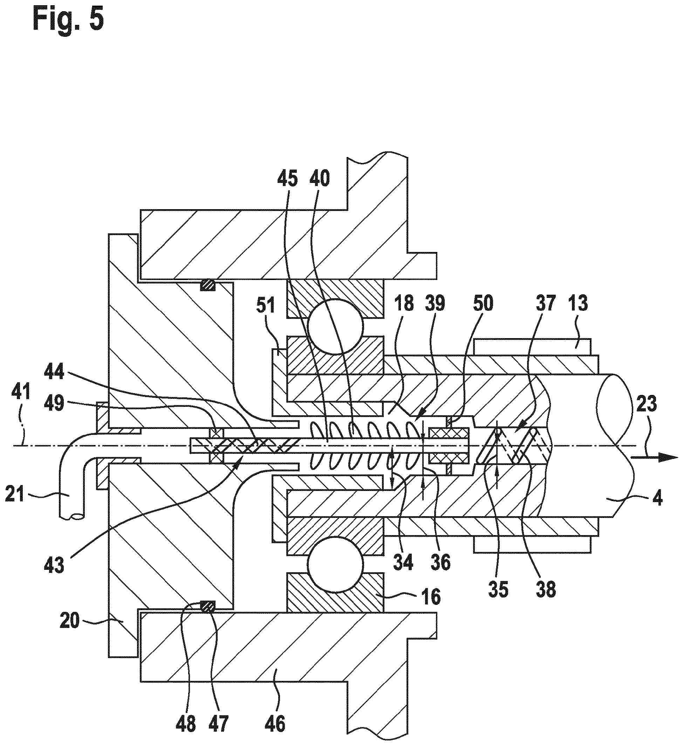

Fig. 5 is a detailed sectional view of the gearbox 3 in an area surrounding the third bearing 16.

The bore 18 of the main shaft 4 has a first radius 34 in a first section at its gearbox-side end. A second section, in which the bore 18 has a second radius 35 being smaller than the first radius 34, extends to the opposite end of the main shaft 4. Between the first section and the second section a third section, in which the bore 18 has a third radius 36 being smaller than the first radius 34 and larger than the second radius 35, is provided.

The main shaft 4 has a first fluid transportation means 37 that is a helical circumferential contour extending in axial direction of the main shaft 4 and protruding in radial direction to the center of the bore 18. The contour is realized by a contour element 38 being a wire or a ribbon made of a polymer and/or metal. The contour element 38 is inserted into the third section of the main shaft 4. Furthermore, the main shaft 4 has a second fluid transportation means 39 comprising a plurality of impellers 40. Each impeller 40 is realized by a plurality of impeller elements being arranged around a rotation axis 41 of the main shaft 4.

Exemplarily, in Fig. 5 six impellers are arranged subsequently in axial direction. Additionally, the main shaft 4 has third fluid transportation means 43 being a screw shaft 44, which is formed as a combined shaft with an impeller shaft 45, to which the impellers 40 are attached.

The inlet element 20 is arranged at a holding structure 46 of the gearbox 3 holding the third bearing 16. A seal ring 47 is arranged in a groove 48 of the inlet element 20. The inlet element 20 comprises a sliding ring 49 supporting the combined shaft, which is coupled to the main shaft 4 in a torque-proof manner by means of a press fit 50 in the third section. Note that the main shaft 4 is connected to the third bearing 13 by an external hex 51, wherein the inlet element 20 extends into the external hex 51 and the bore 18. Via the first fluid channel 21 the fluid is provided to be pumped through the bore 18.

Thus, when rotating the main shaft 4 in the forward drive mode, the fluid transportation means 37, 39, 43 rotate as well and transport the fluid into the flow direction 23. The fluid transportation means 37, 39, 43 may therefore be considered as axial pumps for actively pumping the fluid through the bore 18.

The intermediate shaft 29 comprises a fluid transportation means corresponding to the first fluid transportation means 37 being formed by the contour element 38. Thus, when rotating the intermediate shaft 29 in the forward drive mode, the fluid transportation means and transports the fluid from the inlet 31 to the outlet element 32. Therein, the outlet element 32 may correspond to the inlet element 20 of the main shaft 4. However, the intermediate shaft 29 may comprise further fluid transportation means as described with respect to the main shaft 4.

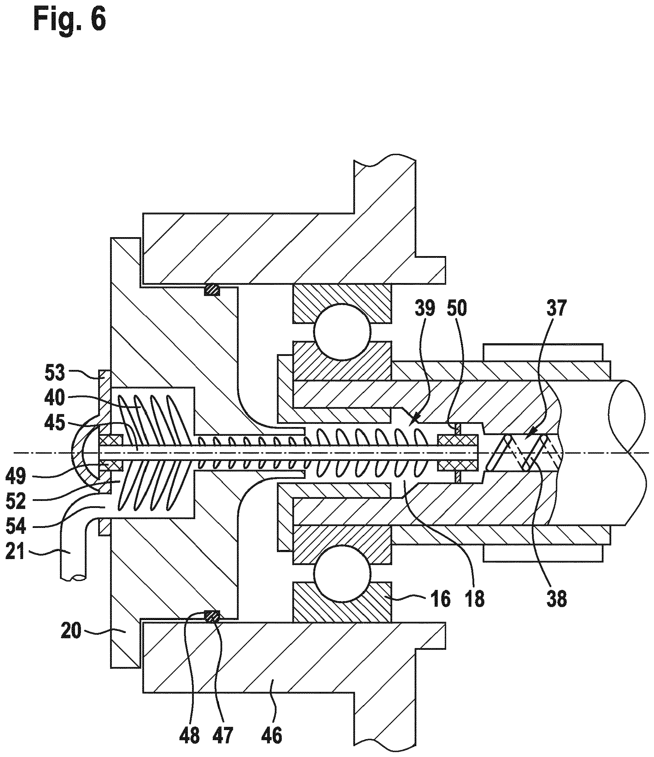

Fig. 6 a detailed sectional view through the gearbox 3 of a second embodiment of an arrangement 1 corresponding to the first embodiment as long as nothing else is mentioned.

The inlet element 21 comprises a fluid chamber 52 having a larger radius than the first section of the bore 18. Inside the fluid chamber 52, into which the impeller shaft 45 extends, some of the impellers 40 of the second fluid transportation means 39 are arranged. The impellers 40 inside the fluid chamber 52 are larger than the impellers 40 arranged inside the bore 18. Thus, the larger impellers 40 inside the fluid chamber 52 allow a higher volume flow of the fluid. Furthermore, the sliding ring 49 is arranged at an end portion of the impeller shaft 49 and inside a lid 53 closing the chamber 52 in axial direction and having an opening 54 for the first fluid channel 21. Although not depicted in Fig. 6, the main shaft for may also comprise the third fluid transportation means 43 having the screw shaft 44.

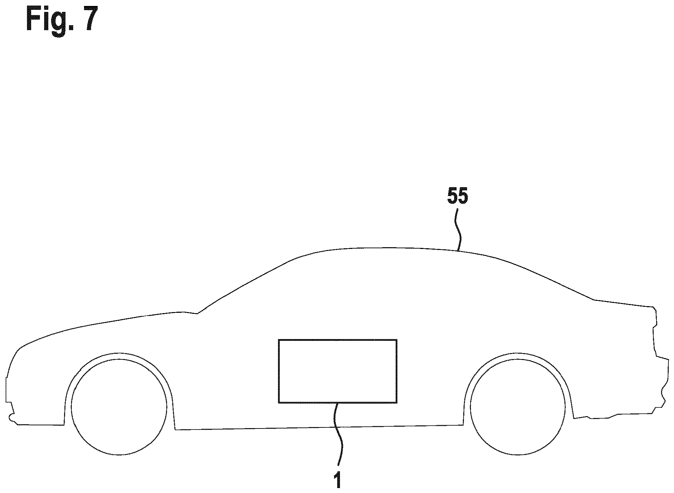

Fig. 7 is a schematic drawing of a vehicle 55 comprising an arrangement 1 according to any of the aforementioned embodiments configured to drive the vehicle 55.

## Claims

1. Arrangement (1) comprising an electric machine (2), and a gearbox (3), wherein the gearbox (3) includes a shaft (4)
- being rotatably coupled with a rotor (5) of the electric machine (2) and
- having a bore (18, 30) extending axially from a gearbox-side end into the direction of the electric machine (2),
**characterized in that**
the shaft (4) comprises a fluid transportation means (39) configured to transport a fluid through the bore (18) by means of rotating the shaft (4), the fluid transportation means (39) comprising an impeller (40) and an impeller shaft (45), to which the impeller (40) is attached, the impeller shaft (45) extending inside the bore (18), having a portion being outside the bore (18) and being supported slidingly at a gearbox-side end of the impeller shaft (45), a sliding ring (49) being provided around the portion of the impeller shaft (45) being outside the bore (18).

2. Arrangement according to claim 1, wherein the shaft (4) of the gearbox (3) comprises a further fluid transportation means (37) being an open circumferential contour, particularly a helical contour, extending in axial direction of the shaft (4) of the gearbox (3) and protruding in radial direction to the center of the bore (18, 30).

3. Arrangement according to claim 2, wherein the contour is realized by a contour element (38) arranged inside the bore (18, 30).

4. Arrangement according to any of the preceding claims, wherein the impeller (40) is arranged outside the bore (18) inside a fluid chamber (52) storing the fluid.

5. Arrangement according to any of the preceding claims, wherein the shaft (4) of the gearbox (3) comprises a further fluid transportation means (43) having a screw shaft (44).

6. Arrangement according to any of the preceding claims, wherein the shaft (4) of the gearbox (3) is a main shaft (4) attached to the rotor (5) and a gear (13) of the gearbox (3).

7. Arrangement according to claim 6, wherein the bore (18) extends through the rotor (5), wherein the arrangement (1) comprises a conduit (24) extending in radial direction and being connected in a fluid-conductive manner to the bore (18) at a side of the rotor (5) being opposite of the gearbox (3).

8. Arrangement according to any of the preceding claims, wherein the gearbox (3) includes an intermediate shaft (29) being rotatably coupled with the rotor (5) of the electric machine (2) via at least two gears (13) of the gearbox, the intermediate shaft (29) having a bore (30) extending axially from the gearbox-side end into the direction of the electric machine (2), and comprising a fluid transportation means configured to transport a fluid through the bore (30) by means of rotating the intermediate shaft (29).

9. Arrangement according to any of the preceding claims, wherein the arrangement (1), comprises a cooling circuit for the fluid, wherein the or a respective bore (18, 30) forms part of the cooling circuit.

10. Arrangement according to claim 9, when being dependent on claim 6, wherein the cooling circuit is closed via the bore (18) of the main shaft (4).

11. Arrangement according to claim 9 or 10, when being dependent on claim 7, wherein the cooling circuit is closed via the conduit (24).

12. Arrangement according to any of claims 9 to 11, when being dependent on claim 8, wherein the cooling circuit is closed via the bore (30) of the intermediate shaft (29).

13. Arrangement according to any of claims 9 to 12, wherein the electric machine (2) comprises a cooling device (27) for a stator (6), inside which the rotor (5) rotates, wherein the cooling device (27) is configured to cool the fluid flowing through the cooling circuit.

14. Vehicle (55) comprising an arrangement (1) according to any of claims 1 to 13 being configured to drive the vehicle (55).

## Patentansprüche

1. Anordnung (1) mit einer elektrischen Maschine (2) und einem Getriebe (3), wobei das Getriebe (3) eine Welle (4) umfasst, die
- rotierbar mit einem Rotor (5) der elektrischen Maschine (2) gekoppelt ist und
- eine Bohrung (18, 30) aufweist, die sich axial von einem getriebeseitigen Ende in Richtung der elektrischen Maschine (2) erstreckt,
**dadurch gekennzeichnet, dass**
die Welle (4) ein Fluidtransportmittel (39) umfasst, das ausgelegt ist zum Transportieren eines Fluids durch die Bohrung (18) durch Rotieren der Welle (4), wobei das Fluidtransportmittel (39) ein Laufrad (40) und eine Laufradwelle (45), an der das Laufrad (40) befestigt ist, umfasst, wobei sich die Laufradwelle (45) innerhalb der Bohrung (18) erstreckt, einen Teil aufweisend, der außerhalb der Bohrung (18) ist und gleitend an einem getriebeseitigen Ende der Laufradwelle (45) gestützt wird, wobei ein Gleitring (49) um den Teil der Laufradwelle (45), der außerhalb der Bohrung (18) ist, bereitgestellt ist.

2. Anordnung nach Anspruch 1, wobei die Welle (4) des Getriebes (3) ein weiteres Fluidtransportmittel (37) umfasst, das eine offene umlaufende Kontur, insbesondere eine spiralförmige Kontur, ist, die sich in axialer Richtung der Welle (4) des Getriebes (3) erstreckt und in radialer Richtung zur Mitte der Bohrung (18, 30) herausragt.

3. Anordnung nach Anspruch 2, wobei die Kontur durch ein Konturelement (38) umgesetzt ist, das innerhalb der Bohrung (18, 30) angeordnet ist.

4. Anordnung nach einem der vorhergehenden Ansprüche, wobei das Laufrad (40) außerhalb der Bohrung (18) im Inneren einer Fluidkammer (52), die das Fluid speichert, angeordnet ist.

5. Anordnung nach einem der vorhergehenden Ansprüche, wobei die Welle (4) des Getriebes (3) ein weiteres Fluidtransportmittel (43) umfasst, das eine Schraubenwelle (44) aufweist.

6. Anordnung nach einem der vorhergehenden Ansprüche, wobei die Welle (4) des Getriebes (3) eine Hauptwelle (4) ist, die an dem Rotor (5) und einem Zahnrad (13) des Getriebes (3) befestigt ist.

7. Anordnung nach Anspruch 6, wobei sich die Bohrung (18) durch den Rotor (5) erstreckt, wobei die Anordnung (1) einen Kanal (24) umfasst, der sich in radialer Richtung erstreckt und in einer Fluid leitenden Weise an einer Seite des Rotors (5) mit der Bohrung (18) verbunden ist, die dem Getriebe (3) gegenüberliegt.

8. Anordnung nach einem der vorhergehenden Ansprüche, wobei das Getriebe (3) eine Zwischenwelle (29) umfasst, die über mindestens zwei Zahnräder (13) des Getriebes rotierbar mit dem Rotor (5) der elektrischen Maschine (2) gekoppelt ist, wobei die Zwischenwelle (29) eine Bohrung (30) aufweist, die sich axial vom getriebeseitigen Ende in die Richtung der elektrischen Maschine (2) erstreckt, und ein Fluidtransportmittel umfassend, das ausgelegt ist zum Transportieren eines Fluids durch die Bohrung (30) durch Rotieren der Zwischenwelle (29).

9. Anordnung nach einem der vorhergehenden Ansprüche, wobei die Anordnung (1) einen Kühlkreis für das Fluid umfasst, wobei die oder eine entsprechende Bohrung (18, 30) einen Teil des Kühlkreises bildet.

10. Anordnung nach Anspruch 9, wenn abhängig von Anspruch 6, wobei der Kühlkreis über die Bohrung (18) der Hauptwelle (4) geschlossen wird.

11. Anordnung nach Anspruch 9 oder 10, wenn abhängig von Anspruch 7, wobei der Kühlkreis über den Kanal (24) geschlossen wird.

12. Anordnung nach einem der Ansprüche 9 bis 11, wenn abhängig von Anspruch 8, wobei der Kühlkreis über die Bohrung (30) der Zwischenwelle (29) geschlossen wird.

13. Anordnung nach einem der Ansprüche 9 bis 12, wobei die elektrische Maschine (2) eine Kühlvorrichtung (27) für einen Stator (6) umfasst, in dessen Innerem der Rotor (5) rotiert, wobei die Kühlvorrichtung (27) ausgelegt ist zum Kühlen des Fluids, das durch den Kühlkreis strömt.

14. Fahrzeug (55), umfassend eine Anordnung (1) nach einem der Ansprüche 1 bis 13, die dazu ausgelegt ist, das Fahrzeug (55) anzutreiben.

## Revendications

1. Agencement (1) comprenant une machine électrique (2), et une boîte d'engrenage (3), dans lequel la boîte d'engrenage (3) inclut un arbre (4)
- couplé de façon rotative à un rotor (5) de la machine électrique (2) et
- ayant un alésage (18, 30) s'étendant axialement depuis une extrémité côté boîte d'engrenage dans la direction de la machine électrique (2),
**caractérisé en ce que**
l'arbre (4) comprend un moyen de transport de fluide (39) configuré pour transporter un fluide à travers l'alésage (18) par le biais de la mise en rotation de l'arbre (4), le moyen de transport de fluide (39) comprenant une turbine (40) et un arbre de turbine (45), auquel la turbine (40) est attachée, l'arbre de turbine (45) s'étendant à l'intérieur de l'alésage (18), ayant une partie à l'extérieur de l'alésage (18) et étant supporté de façon coulissante à une extrémité côté boîte d'engrenage de l'arbre de turbine (45), une bague coulissante (49) prévue autour de la partie de l'arbre de turbine (45) étant à l'extérieur de l'alésage (18).

2. Agencement selon la revendication 1, dans lequel l'arbre (4) de la boîte d'engrenage (3) comprend un moyen de transport de fluide supplémentaire (37) qui est un contour circonférentiel ouvert, particulièrement un contour hélicoïdal, s'étendant dans une direction axiale de l'arbre (4) de la boîte d'engrenage (3) et faisant saillie dans une direction radiale par rapport au centre de l'alésage (18, 30).

3. Agencement selon la revendication 2, dans lequel le contour est réalisé par un élément de contour (38) agencé à l'intérieur de l'alésage (18, 30).

4. Agencement selon l'une quelconque des revendications précédentes, dans lequel la turbine (40) est agencée à l'extérieur de l'alésage (18) à l'intérieur d'une chambre de fluide (52) stockant le fluide.

5. Agencement selon l'une quelconque des revendications précédentes, dans lequel l'arbre (4) de la boîte d'engrenage (3) comprend un moyen de transport de fluide supplémentaire (43) ayant un arbre à vis (44).

6. Agencement selon l'une quelconque des revendications précédentes, dans lequel l'arbre (4) de la boîte d'engrenage (3) est un arbre principal (4) attaché au rotor (5) et une pièce d'engrenage (13) de la boîte d'engrenage (3).

7. Agencement selon la revendication 6, dans lequel l'alésage (18) s'étend à travers le rotor (5), dans lequel l'agencement (1) comprend un conduit (24) s'étendant dans une direction radiale et raccordé de manière fluidiquement conductrice à l'alésage (18) sur un côté du rotor (5) opposé à la boîte d'engrenage (3).

8. Agencement selon l'une quelconque des revendications précédentes, dans lequel la boîte d'engrenage (3) inclut un arbre intermédiaire (29) couplé de façon rotative au rotor (5) de la machine électrique (2) par l'intermédiaire d'au moins deux pièces d'engrenage (13) de la boîte d'engrenage, l'arbre intermédiaire (29) ayant un alésage (30) s'étendant axialement depuis l'extrémité côté boîte d'engrenage dans la direction de la machine électrique (2), et comprenant un moyen de transport de fluide configuré pour transporter un fluide à travers l'alésage (30) par le biais de la mise en rotation de l'arbre intermédiaire (29).

9. Agencement selon l'une quelconque des revendications précédentes, dans lequel l'agencement (1) comprend un circuit de refroidissement pour le fluide, dans lequel l'alésage ou un alésage respectif (18, 30) fait partie du circuit de refroidissement.

10. Agencement selon la revendication 9, lorsqu'elle dépend de la revendication 6, dans lequel le circuit de refroidissement est fermé par l'intermédiaire de l'alésage (18) de l'arbre principal (4).

11. Agencement selon la revendication 9 ou 10, lorsqu'elle dépend de la revendication 7, dans lequel le circuit de refroidissement est fermé par l'intermédiaire du conduit (24) .

12. Agencement selon l'une quelconque des revendications 9 à 11, lorsqu'elle dépend de la revendication 8, dans lequel le circuit de refroidissement est fermé par l'intermédiaire de l'alésage (30) de l'arbre intermédiaire (29).

13. Agencement selon l'une quelconque des revendications 9 à 12, dans lequel la machine électrique (2) comprend un dispositif de refroidissement (27) pour un stator (6), à l'intérieur duquel le rotor (5) entre en rotation, dans lequel le dispositif de refroidissement (27) est configuré pour refroidir le fluide s'écoulant à travers le circuit de refroidissement.

14. Véhicule (55), comprenant un agencement (1) selon l'une quelconque des revendications 1 à 13 configuré pour entraîner le véhicule (55).
